Europäisches Patentamt

European Patent Office

Office européen des brevets

(19)

(11) Publication number: **0 211 094**
**A1**

## (12) EUROPEAN PATENT APPLICATION

(21) Application number: **85109640.4**

(22) Date of filing: **31.07.85**

(51) Int. Cl.⁴: **B60Q 1/18**

(43) Date of publication of application:
**25.02.87 Bulletin 87/09**

(84) Designated Contracting States:
**CH DE FR GB LI**

(71) Applicant: **Bacolini, Eletto**
**Via delle Rosine 3**
**Torino(IT)**

(72) Inventor: **Bacolini, Eletto**
**Via delle Rosine 3**
**Torino(IT)**

(74) Representative: **Riederer Freiherr von Paar zu**
**Schönau, Anton**
**Freyung 615 Postfach 2664**
**D-8300 Landshut(DE)**

(54) **Auxiliary headlight to be installed on the front side of a motor vehicle.**

(57) An auxiliary headlight 1 adapted to be installed on the front side of a motor vehicle is housed in a substantially conical hollow non-reflecting metallic body 2, provided, in its front portion, with a transparent protection cap 6. The conical body 2 is housed in a recess 3 formed in the lower front portion of the motor vehicle below the conventional optical system and the auxiliary headlight is positioned within the cone in a location which is set back relative to the outcoming light of the light beam.

Fig. 2

## Auxiliary Headlight to be Installed on the Front Side of a Motor Vehicle

This invention is concerned with a particular auxiliary headlight adapted to be installed on the front side of a motor vehicle, and more specifically as regards its realization and functionality.

It is well known that the conventional lighting devices for motor vehicles are divided into those whose function consists in rendering visible the vehicle, and those which serve to illuminate the road during the travel under conditions of poor or no visibility.

Referring particularly to this latter type of lighting device, it can be noticed that the driving beams, although ensuring the illumination of a wide field of vision, compromise the visual perception possibilities of the driver of a vehicle driving in the opposite direction, whilst the lower beams do not jeopardize the visual perception of the driver of the vehicle that runs in the opposite direction, but provide a poor illumination of the roadway; in addition, both types of devices to not ensure any optimum illumination of the road edge or border facing the vehicle, with the consequent difficulties of promtly singling out obstacles which may interfere with the movement of the vehicle in that portion of the carriageway.

To obviate these disadvantages, an auxiliary headlight adapted to be installed on the front side of the motor vehicle is provided whose main characteristic consists in the generation of a light beam which does not interfere with the visual perception of the driver of a vehicle running in the opposite direction and is adapted to illuminate in an optimum manner the road border facing the motor vehicle. This object is attained by the invention as defined in the claims.

A preferred embodiment of the invention will now be described by way of a non-limiting example with reference to the annexed drawings in which:

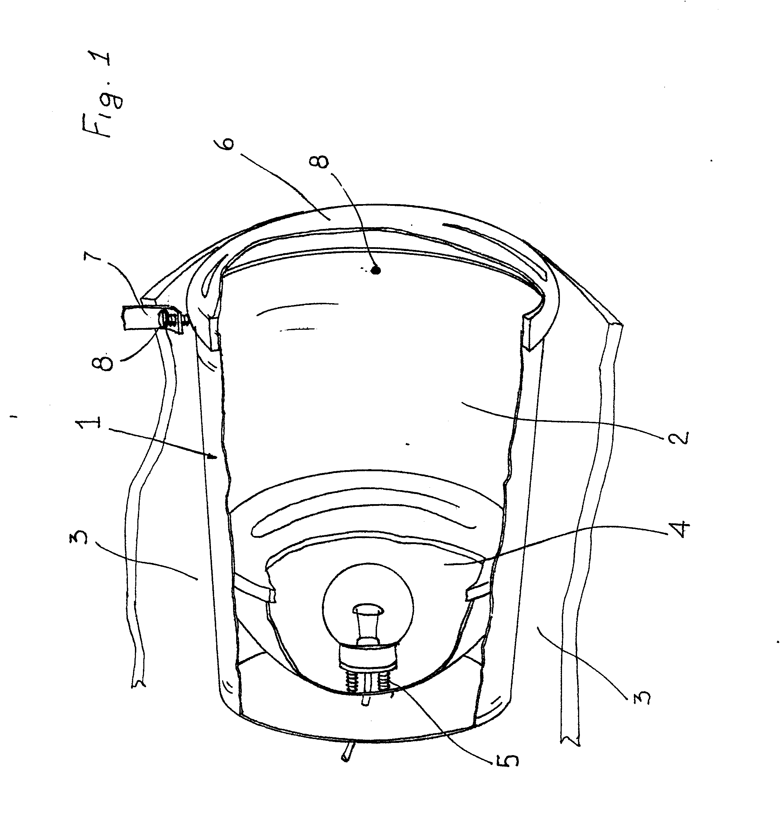

-Fig. 1 is a sectional side view of the auxiliary headlight forming the subject matter of the invention;

-Fig. 2 is a partially sectional side view of the auxiliary headlight in the installed condition; and

-Fig. 3 is a front view of the arrangement shown in Fig. 2.

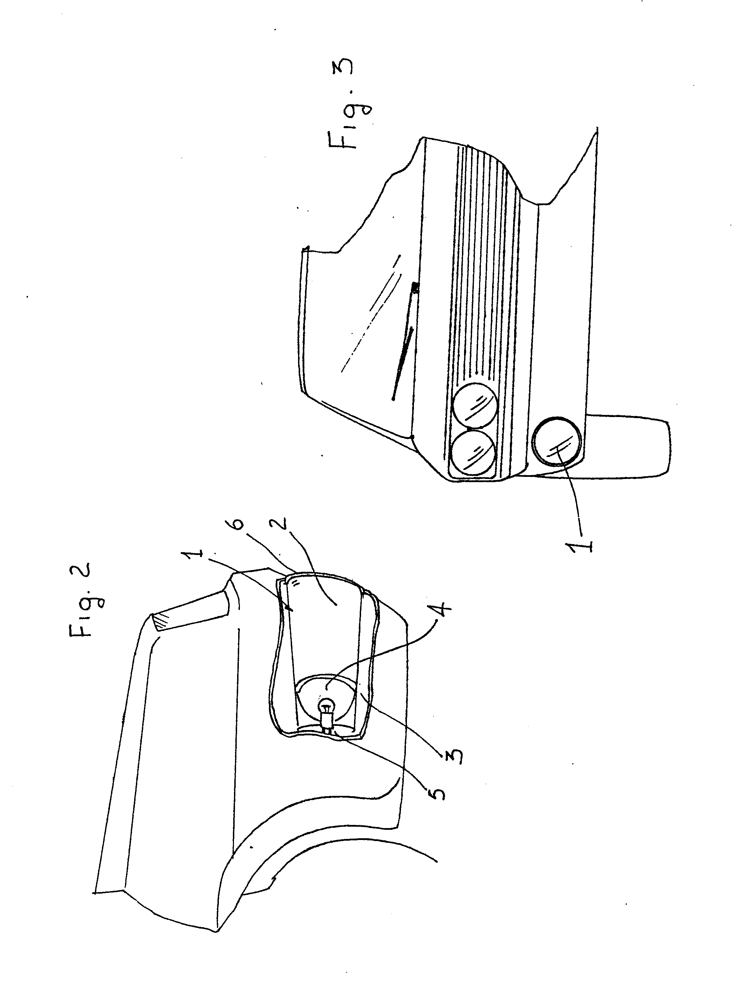

Referring to the annexed drawings, and in particular to Fig. 2, reference numeral 1 indicates generally the auxiliary headlight, i.e. the device installed in accordance with the principles of the invention; reference numeral 2 indicates a substantially conical non-reflecting hollow metallic body having a length of almost 200 mm and a cone angle of approximately 10° and being inserted, level with the extreme edge of the vehicle, into a recess 3 formed in the lower front portion of the body of said vehicle, below the conventional headlights, said conical body 2 being adapted to contain an optical system 4 as in a known headlight comprising a bulb and a parabolic reflector the rim diameter of which is approximately 150 mm, the optical system 4 being positioned within the conical body 2 in a set back location relative to the light coming out from the light source, i.e. from the front face of the conical body 2, by approximately 150 mm and being conventionally anchored on the chassis of the motor vehicle, for example by means of known screw members 5, and connected to the electric system of the vehicle. The conical body 2, in its turn, is provided in its front portion with a snap-insertable transparent protection cap 6, whilst the fastening of said conical body 2 to the chassis of the motor vehicle is ensured, for example, by three brackets 7 disposed radially relative to said conical body and provided with suitable screw means 8 for the swivelling adjustment of the light beam of the headlight.

The object of the present invention is the pursuing of the following function:

In conditions of poor luminosity and when the vehicle runs along poorly illuminated extra-urban roads, the device according to the invention, activated by means of a common switch conventionally positioned on the dashborad of the vehicle, allows obtaining the optimum illumination of a long section of the road edge facing the direction of movement of the vehicle, thus allowing to promtly perceive the presence of possible obstacles, because it generates a beam of light whose length is substantially equal to that of the driving beams of the vehicle, though not interfering with the visual field of the driver of the vehicle coming from the opposite direction, since the light source is suitably directed and set back inside the non-reflecting cone in which it is housed and which in this way performs a useful function of a directional screen.

In any case the dimensional and technical characteristics of the device according to the present invention are susceptible of being widely varied in order to allow adapting them both to the rules in force and the different types of motor vehicles, without departing from the scope of the present invention as protected by the following claims.

## Claims

1. An auxiliary headlight (1) adapted to be installed on the front side of a motor vehicle, constituted by known members forming a conventional parabolic reflection optical system (4), characterized in that said optical system (4) is housed in a substantially conical hollow non-reflecting metallic body (2) which is provided, in its front portion, with a transparent protection cap (6).

2. The auxiliary headlight as claimed in claim 1, characterized in that the conical body (2) is housed in a recess (3) formed in the lower front portion of the motor vehicle below the conventional headlight.

3. The auxiliary headlight as claimed in claim 1 or 2, characterized in that the conical body (2) is connected to the chassis of the motor vehicle by means od conventional brackets (7) which, in their turn, are provided with known screw means (8) for the adjustment of the swivelling of the headlight.

4. The auxiliary headlight as claimed in any of claims 1 to 3, characterized in that the optical system (4) is positioned within the conical body - (2) in a location which is set back relative to the outcoming light of the light beam.

5. The auxiliary headlight as claimed in any of claims 1 to 4, characterized in that the optical system (4) is conventionally fixed to the motor vehicle and connected to the existing electric feeding system of the vehicle.

6. The auxiliary headlight as claimed in any of claims 1 to 5, characterized in that the distance of the optical system (4) from the outcoming light of the light beam is between 0,7-times and twotimes the diameter of the parabolic reflector of the optical system.

7. The auxiliary headlight as claimed in any of claims 1 to 6, characterized in that the conical body (2) is up to 200 mm in length and the distance of the optical system (4) within the conical body from the outcoming light of the light beam is comprised between 130 mm and 180 mm.

8. The auxiliary headlight as claimed as in any of claims 1 to 7, characterized in that the angle of cone of the conical body is comprised between 5° and 20° and preferably is approximately 10°.

Fig. 1

Fig. 2

Fig. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A- 396 371 (FRIANN HOLDING DE BREVETS DE MECANIQUE ET ELECTRICITE) * Figure 2 * | 1 | B 60 Q  1/18 |
| A | * Figure 1 * | 3,8 | |
| Y | FR-A-1 306 792 (DAUZIER) * Figures 1,2 * | 1 | |
| Y | FR-A-1 110 851 (COUTELLER) * Page 1, right-hand column, lines 25-43; figures 1,2 * | 1 | |
| A | | 2 | **TECHNICAL FIELDS SEARCHED (Int. Cl.4)** |
| A | FR-A-1 561 521 (NORDBERG) * Figures 10,16 * | 1 | B 60 Q |
| A | FR-A-1 095 417 (ROCHE) * Figure 1 * | 1-8 | |
| A | FR-A-1 315 821 (QUENNOY) * Figures 1-6 * | 1 | |

The present search report has been drawn up for all claims

| Place of search | Date of completion of the search | Examiner |
|---|---|---|
| THE HAGUE | 14-02-1986 | ONILLON C.G.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82